# EUROPEAN PATENT SPECIFICATION

(11) **EP 2 678 993 B1**
(45) Date of publication and mention of the grant of the patent: **08.04.2015**
(21) Application number: 11714610.0
(22) Date of filing: 23.02.2011
(51) Int. Cl.: H04L 29/08

(54) **METHOD AND APPARATUS FOR NOTIFICATIONS IN A COMMUNICATION NETWORK**
VERFAHREN UND VORRICHTUNG FÜR BENACHRICHTIGUNGEN IN EINEM KOMMUNIKATIONSNETZWERK
PROCÉDÉ ET DISPOSITIF POUR ENVOYER DES NOTIFICATIONS DANS UN RÉSEAU DE COMMUNICATION

(43) Date of publication of application: 01.01.2014
(73) Proprietor: Telefonaktiebolaget L M Ericsson (PUBL), 164 83 Stockholm (SE)
(72) Inventor: KLEIN, Mikael, S-141 69 Huddinge (SE); BOBERG, Christer, S-137 55 Tungelsta (SE); LASSBORN, Sofie, S-191 43 Sollentuna (SE); LINDGREN, Anders, S-125 74 Älvsjö (SE)
(74) Representative: Strandin, Heléne
(86) International application number: PCT/SE2011/050208
(87) International publication number: WO 2012/115549

(56) References cited:
- US-A1- 2007 078 968
- SCHULZRINNE R SHACHAM COLUMBIA UNIVERSITY W KELLERER S THAKOLSRI DOCOMO EUROLABS H: "Composing Presence Information; draft-schulzrinne-simple-composition- 02.txt", 5. JCT-VC MEETING; 96. MPEG MEETING; 16-3-2011 - 23-3-2011; GENEVA;(JOINT COLLABORATIVE TEAM ON VIDEO CODING OF ISO/IEC JTC1/SC29/WG11AND ITU-T SG.16 ); URL: HTTP://WFTP3.ITU.INT/AV-ARCH/JC TVC-SITE/- 17/03/2011, INTERNET ENGINEERING TASK FORCE, IETF, no. 2, 25 June 2006 (2006-06-25), XP015045334, ISSN: 0000-0004
- SCHULZRINNE H: "The SIMPLE Presence and Event Architecture", COMMUNICATION SYSTEM SOFTWARE AND MIDDLEWARE, 2006. COMSWARE 2006. FIR ST INTERNATIONAL CONFERENCE ON NEW DELHI, INDIA 08-12 JAN. 2006, PISCATAWAY, NJ, USA,IEEE, 8 January 2006 (2006-01-08), pages 1-9, XP010932382, DOI: 10.1109/COMSWA.2006.1665181 ISBN: 978-0-7803-9575-6

## Description

### Technical field

The invention relates generally to a method and arrangement for providing notifications for terminal users in a communication network.

### Background

Messaging services are becoming increasingly popular amongst terminal users in communication networks today. A particular example of emerging services is the presence services which basically make data related to a specific client available to other clients over a communication network. In presence services, presence data of a client is collected and stored in a presence server and can then be delivered to clients subscribing to that presence data. In the following description, a "client" is typically a terminal user in the communication network, although in some practical cases it can also be a "machine function" such as an application, sensor or counter.

The presence data may refer to various different parameters and characteristics of the clients, commonly referred to as "attributes", including information relating to, e.g., terminal status, capabilities, selections and settings, as well as information relating to the current situation of the client such as availability, geographic location and physical environment. The attributes may also include more personal client information, e.g. interests and needs, current activities, personal characteristics, moods, and so forth.

This type of information can thus be collected on a continuous basis in presence servers based on publications received from any "presence sources" associated with the clients, such as terminals and access networks, whenever any presence data for a client is introduced, updated, changed or deleted. A client may subscribe to selected presence data of other clients. In this field, the term "watcher" generally represents a client that subscribes to or obtains presence data of one or more other clients, while a "presentity" generally represents a client that publishes presence data in the presence server to be available for any authorized watchers. The presence server sends published presence data in notifications to the watchers, typically in the form of XML (Extensible Mark-up Language) documents.

The well-known protocol SIP (Session Initiation Protocol) is typically used as a framework for the above handling of presence data over the communication network. The SIP message called "SIP PUBLISH" is used by presentities to send presence data to the presence server for publication. Another SIP message called "SIP SUBSCRIBE" is used by watchers to request for presence data of presentities. Yet another SIP message called "SIP NOTIFY" is used by the presence server to deliver fresh presence data to watchers. Alternatively, HTTP (Hypertext Transfer Protocol) can be used in presence services, e.g. the watcher can fetch presence data from the server by means of a regular "HTTP GET" or "HTTP POST' message. Further, the presentity may use a regular "HTTP PUT" message or the HTTP POST message to publish data. The mechanisms above are commonly referred to as the PUBLISH, SUBSCRIBE and NOTIFY methods, enabling the watcher to always have up-to-date presence status regarding the presentity. Typically, the presence server sends a new NOTIFY to the watcher whenever the state of the presentity is updated.

A presentity client can be represented by more than one communication terminal or device, such as when the client has both a mobile phone and a PC (Personal Computer), and presence data of one client may be sent to the presence server from multiple presence sources associated with that client. As a result, the presence data published in the server may refer to the same attribute such that the published presence data from two sources overlap or even contradict each other, i.e. conflicting data. It is therefore useful to implement a composition function in the presence server that merges or aggregates such data from multiple sources into a joint notification according to specific composition rules.

In some conventional solutions, all published presence data, including any conflicting data of the same attribute, is simply concatenated in the notification, leaving the receiving watcher client to figure out what data is valid or not in the notification. The watcher would therefore be helped by a logic function for determining, e.g., which attribute value in the notification is valid if different values of the same attribute have been published with different timestamps from different sources, unless all presence data in the notification is presented to the user as is, i.e. without any processing.

US 2007/0233798 A1 & US 2007/0078968 A1 disclose a procedure, executed by a "presence compositor" e.g. in a presence server, for applying a "composition rule" that dictates what presence information of a presentity is valid when sent to a watcher, which depends on a "presence information element" of the presentity or of the watcher. It is mentioned in the background that a fixed composition rule could say that the latest one of two conflicting information publications is always deemed to contain the most reliable information, which thus will be used to determine the valid presence state, see [0005]. A problem is identified in that this rule may still produce erroneous results, e.g. when a cellular phone publishes information indicating that the user is actually in his vehicle and a PC at a later time automatically publishes information assuming that the user is in his office, the latter not being true in this example.

The solution to this problem presented in US 2007/0233798 A1 & US 2007/0078968 A1, is that the presence sources send composition rules together with information publications to the presence compositor which may reside in a presence server or in a watcher's equipment. The presence compositor then applies the received composition rules to resolve any conflict between the information publications and to determine the currently valid presence state, see [0017]. This solution thus relies on the presence sources to send composition rules.

Various problems may arise when using the above-described solutions. In the case when all presence data from multiple sources is concatenated in the notification to a watcher, either the user himself or a logic function in the watcher's equipment must evaluate any conflicting data to determine what is valid or not. Another drawback with this solution is that the notification may be excessively large when containing overlapping and/or conflicting data of the same attribute(s) originating from different sources, thus requiring undue resources for communicating and processing the notification. Further, conventional composition rules are rather inflexible by not being adapted to the current situation of the watcher and/or the presentity. For example, some watcher equipments may not be capable of receiving and/or handling the resulting notification document.

In the solution of US 2007/0233798 A1 & US 2007/0078968 A1, a logic function is required in the presentity's equipment, i.e. the presence sources, for selecting and sending composition rules along with information publications to the presence compositor, which may be quite frequent and numerous thus requiring undue resources and logic for communicating and processing the publications and rules. Moreover, the composition rules in this solution are presumably sent with the publications regardless of whether they are needed or used at the receiver, i.e. also when no conflict or overlap of presence data from different sources occurs, and regardless of whether the watcher understands and is capable of applying the rule. As a result, bandwidth consuming information will be sent to no avail.

### Summary

It is an object of the invention to address at least some of the problems and issues outlined above. It is possible to achieve this object and others by using a method and an arrangement as defined in the attached independent claims.

According to one embodiment, a method in a notification server is defined for providing data of a presentity to a watcher. In this method, the notification server receives published data from multiple sources associated with the presentity. The notification server further selects a composition policy from a set of predefined composition policies based on information regarding the watcher, and composes a notification by applying the selected composition policy to the received data. The notification is then sent to the watcher.

According to another embodiment, an arrangement in a notification server is configured to provide data of a presentity to a watcher. According to this arrangement, a receiving module in the notification server is adapted to receive published data from multiple sources associated with the presentity. A selecting module is adapted to select a composition policy from a set of predefined composition policies based on information regarding the watcher. Further, a composing module in the notification server is adapted to compose a notification by applying the selected composition policy to the received data, and a communication unit is adapted to send the notification to the watcher.

By using the above method or arrangement in the notification server, several benefits may be achieved. For example, different composition policies can be applied for notifications depending on the watcher's current abilities, characteristics, conditions and/or situation. It is also possible to optimize and compose the notification with relevant and useful information without including conflicting and/or overlapping data. The notification can further be made of limited size without consuming undue bandwidth when communicated.

The above method and arrangement may be configured and implemented according to different embodiments. In some possible embodiments, the information regarding the watcher refers to at least one of: a type of terminal used by the watcher, a current context of the watcher, characteristics of the watcher, a service agreement used by the watcher, and an access network currently used by the watcher.

In other possible embodiments, the current context of the watcher is determined from data published by the watcher. The information regarding the watcher may alternatively refer to a preferred composition policy in the set of predefined composition policies. In that case, a request received from the watcher for data of the presentity may indicate the preferred composition policy, and the preferred composition policy in the request is selected.

If the data received from the data sources is potentially overlapping or conflicting and include different timestamps, the selected composition policy may dictate that only the data with a latest timestamp should be included in the notification. In that case, any non-overlapping or non-conflicting data received from any of the data sources may be included as well in the notification regardless of timestamp. The composition policy may be selected further based on a current context of the presentity.

Further possible features and benefits of this solution will become apparent from the detailed description below.

### Brief description of drawings

The invention will now be described in more detail by means of exemplary embodiments and with reference to the accompanying drawings, in which:
Fig. 1 is a schematic block diagram illustrating how a notification server can create a notification, according to a possible embodiment.
Fig. 2 is a flow chart with actions performed by a notification server, according to another possible embodiment.
Fig. 3 and Fig. 4 are exemplifying signaling diagrams for how a notification can be provided in practice, according to further possible embodiments.
Fig. 5 is a block diagram illustrating a notification server in more detail, according to further possible embodiments.
Fig. 6 illustrates schematically an example of how a notification can be composed from data received from two presentity sources, according to a possible implementation.

### Detailed description

Briefly described, the invention can be used to provide a notification with data of a presentity to a watcher, when the data has been published from multiple sources associated with the presentity, i.e. from at least two such sources. In this solution, a logic for selecting and applying a composition policy to compose the notification from the published data, resides in a notification server configured to deliver notifications to watchers. The notification mechanism referred to in this description may be used to support the well-known presence services and the notification server can thus be a presence server, even though the invention is generally not limited to the concept of presence.

In particular, the notification server selects a composition policy from a set of predefined composition policies at least based on information regarding the watcher. Thereby, the notification can be adapted to the receiving watcher, e.g. depending on its current abilities and situation. Further, no logic for selecting and communicating composition rules is needed in the presentity's data sources. It is thus possible to compose the notification at the notification server such that the information therein is potentially relevant and useful particularly for the receiving watcher, as well as being devoid of any conflicting and/or duplicated data.

In this way, the notification can be "optimized" and composed with reasonable size without consuming bandwidth unnecessarily when communicated. The notification server may obtain the above information regarding the watcher in different ways, e.g. from an access network or presence server of the watcher, or the information may be included in a request for data on the presentity received from the watcher, which will be described in more detail later below. The watcher information may also be stored and maintained in a local database at the notification server, e.g. on a regular basis, to be retrieved locally whenever a notification is to be composed and delivered. This solution is thus not limited to any particular way of obtaining the watcher information.

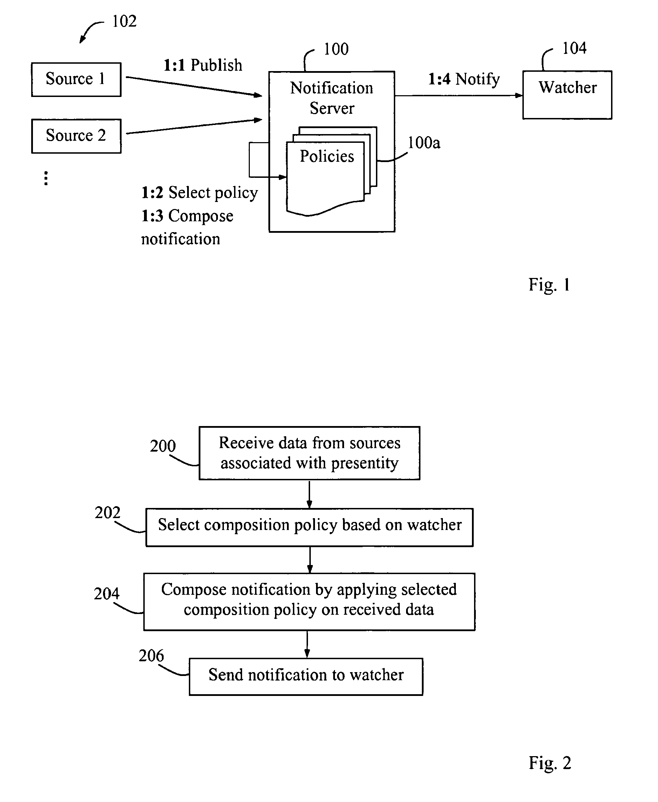

An example of how a notification can be composed for a watcher will now be described with reference to a communication scenario illustrated in Fig. 1. A notification server 100 has been provisioned with a set of predefined composition policies 100a, which may include composition policies that are generic for any watchers or dedicated specifically for the watcher 104 or for a group or category of watchers. This example illustrates how the notification server 100 composes a notification for the watcher 104 from data received from multiple sources 102 associated with the presentity, not shown. For example, the data sources 102 may include a PC and a mobile phone used by the presentity although the invention is not limited to any particular types or number of such data sources.

In a first shown **action 1:1**, the data sources 102 publish data of the presentity which is received at the notification server 100, e.g. according to regular presence procedures or the like. Any of the above-mentioned messages SIP PUBLISH, HTTP PUT and HTTP POST may be used in this communication. The data published from different sources 102 may be mutually conflicting, overlapping or duplicated. It is assumed that the notification server 100 has received a request for data on the presentity at some point, either before or after action 1.1. The notification server 100 then selects a composition policy from the predefined composition policies 100a based on information regarding the watcher, in a next **action 1:2**, to use when composing the notification.

In a further **action 1:3**, the notification server 100 composes the notification by applying the selected composition policy to the data received in the above action 1:1. The composed notification is eventually delivered to the watcher in a final shown **action 1:4**. The notification can thus be optimized or at least somehow adapted to the watcher by selecting the composition policy based on the watcher in action 1:2.

The watcher information used for the policy selection in action 1:2 may refer to different aspects of the watcher as follows. For example, the composition policy may be selected based on what type of terminal is used by the watcher, such that the format and/or size of the notification can be adapted to capabilities of the terminal type. The composition policy may also be selected based on a current context of the watcher which may be determined from data published by or for the watcher e.g. in a presence server of the watcher. The amount and/or type of information wanted in the notifications may thus be dependent on the watcher's current situation. For example, relatively shorter notifications may be desirable when the watcher is abroad or in a certain environment, or at certain times of day, week or season. Further possible factors for policy selection include various characteristics of the watcher, i.e. what "type" of user the watcher is, e.g. gender, age, interests, occupation, etc. A service agreement used by the watcher as well as what access network or communication channel is currently used by the watcher, may also be used as a basis for policy selection. This solution is thus not limited to any particular type(s) of watcher information.

It should be noted that the notification may be triggered at the notification server 100 by a request from the watcher, or when published data on the presentity has been received as of action 1:1, or at regular intervals according to a preset notification scheme, depending on the implementation. Notifications may be composed and sent to the watcher according to a watcher subscription for notifications on the presentity, e.g. started by an initial subscription request from the watcher. For example, the triggering mechanism for notifications may operate similar to any regular presence procedures or the like, and the invention is not limited in this respect.

Further, the information regarding the watcher may refer to a specific preferred composition policy in the set of predefined composition policies 100a. For example, a request for data of the presentity may be received from the watcher where the preferred composition policy is indicated in the request, using a suitable identification of the policy, and the notification server 100 accordingly selects the preferred composition policy in the request for composing the notification.

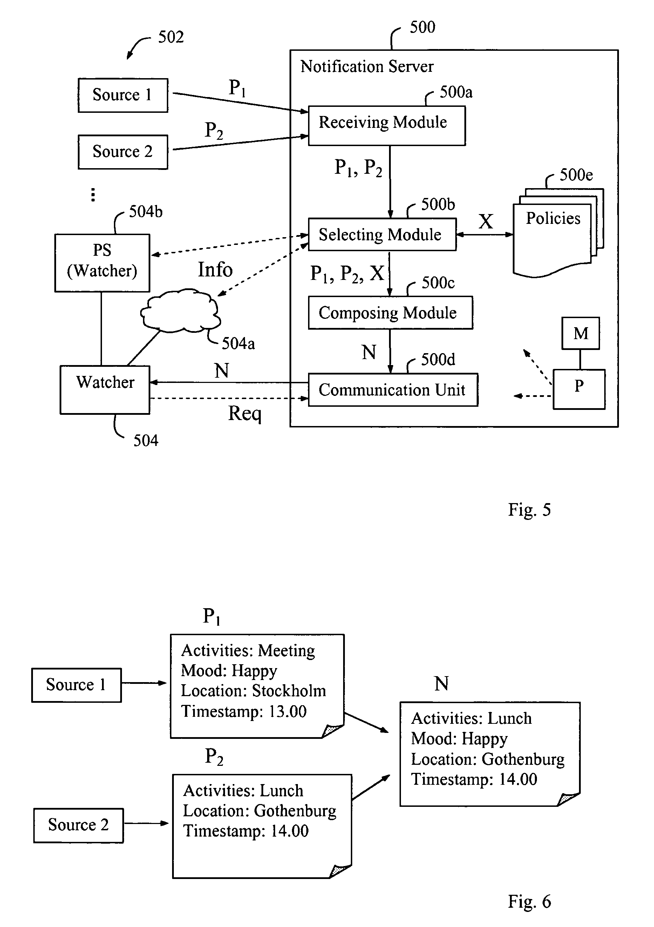

As mentioned above, the notification may be composed in different ways depending on the selected policy. For example, if the data received from the sources 102 is potentially overlapping or conflicting and include different timestamps, the selected composition policy may dictate that only the data with the latest timestamp should be included in the notification. In addition, any non-overlapping or non-conflicting data received from any of the sources 102 may also be included in the notification regardless of timestamp. A practical example of composing a notification from overlapping and conflicting data will be presented later below with reference to Fig. 6. In addition to the watcher information, the composition policy may be selected further based on a current context of the presentity. For example, the current activity or exact location of the presentity may not be of interest to have in the notification if he/she is abroad.

An exemplifying procedure for providing data of a presentity to a watcher, will now be described with reference to the flow chart in Fig. 2. The shown actions in this process can be executed by a notification server, such as the server 100 in Fig. 1. It is again assumed that the notification server has been provisioned with set of predefined composition policies. In a first **action 200**, the notification server receives published data from multiple sources associated with the presentity, basically corresponding to action 1:1 above.

The notification server then selects a composition policy from the set of predefined composition policies based on information regarding the watcher, in a next **action 202**, e.g. in the manner described for action 1:2 above. In a further **action 204**, the notification server composes the notification by applying the selected composition policy to the received data, e.g. as described for action 1:3 above. In a final **action 206**, the notification server sends the composed notification to the watcher. Thereby, an optimized and reasonably sized notification with particularly relevant and useful information can be composed for the receiving watcher, and without including any conflicting and/or duplicated data. No particular functionality apart from normal is required at the sources nor at the presentity, to implement this process.

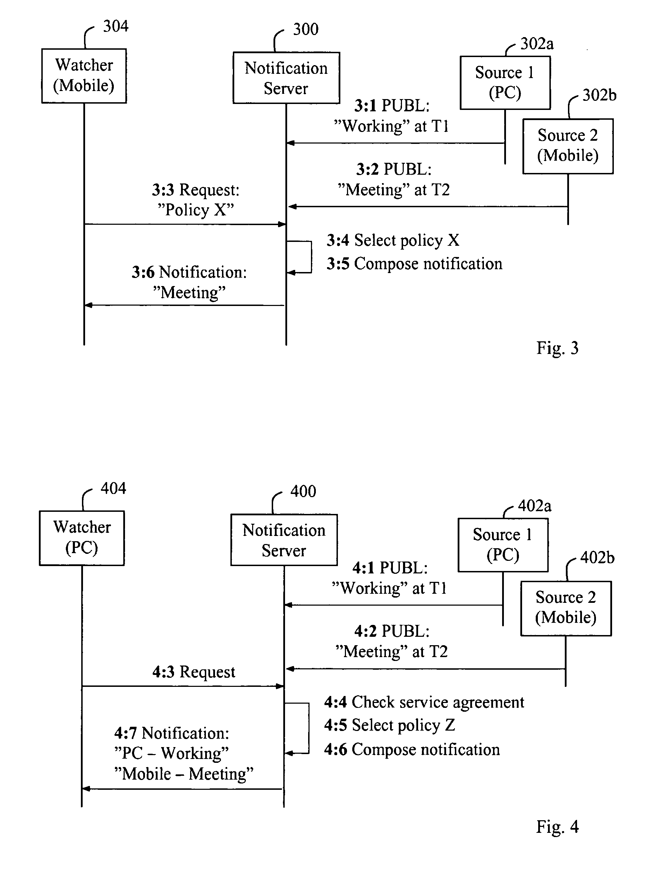

Some examples of how this solution can be implemented in practical communication scenarios, will now be described with reference to the signaling diagrams in Fig. 3 and Fig. 4. In either example, a notification server 300, 400 has been provisioned with set of predefined composition policies, not shown here, just as in the examples of Figs 1 and 2. Two different data sources associated with the presentity are involved in these examples: a PC 302a, 402a and a mobile phone 302b, 402b. In Fig. 3, the watcher 304 uses a mobile phone while in Fig. 4, the watcher 404 uses a PC.

In Fig. 3, the notification server 300 receives from a first source 302a, thus the presentity's PC, a published set of data with a timestamp "T1", in an **action 3:1.** This data includes the attribute "Activities: Working". The notification server 300 further receives from a second source 302b, thus the presentity's mobile phone, a published set of data with a later timestamp "T2", in another **action 3:2.** This data includes the attribute "Activities: Meeting" which actually conflicts in some sense with the previous attribute "Activities: Working" received from the PC 302a.

In this example, the notification server 300 receives a request from watcher 304 for data on the presentity at this point, shown by **action 3:3**, which request indicates a preferred composition policy "X" amongst the set of predefined composition policies. The preferred composition policy "X" in the request thus constitutes the "information regarding the watcher" according to the terminology used in this description.

The notification server 300 then accordingly selects the preferred composition policy X in an **action 3:4**, and composes the notification by applying policy X to the received data in a further **action 3:5**. In this case, the policy X dictates that when conflicting data of the same attribute has been received with different timestamps, only the data with the latest timestamp should be included in the notification, in this case timestamp T2 in the publication received in action 3:2 from the mobile phone 302b. As a result, notification server 300 includes the attribute "Activities: Meeting" in the notification but omits the attribute "Activities: Working" in accordance with the timestamps T1 and T2 of the publications received in actions 3:1 and 3:2, respectively. The notification server 300 finally sends the notification to the watcher 304 in **action 3:6**.

Fig. 4 illustrates another example where the notification server 400 likewise receives published data with timestamps T1 and T2 from the PC 402a and mobile phone 402b in **actions 4:1** and **4:2**, respectively. In a further **action 4:3**, the notification server 400 receives a request from watcher 404 for data on the presentity, with no preferred composition policy indicated this time. Instead, the notification server 400 checks a service agreement of the watcher in an **action 4:4**, which dictates that a particular composition policy "Z" should be applied for this particular watcher when composing a notification. Therefore, policy Z is selected in a next **action 4:5** which in turn dictates that both attribute values should be included in the notification, since the watcher uses a PC that can cope with lengthy notifications. Accordingly, notification server 400 composes a notification in **action 4:6** with attributes "Activities: PC - Working" and "Activities: Mobile - Meeting" and sends the notification to the watcher 404 in **action 4:7.**

A more detailed but non-limiting example of how an arrangement can be implemented in a notification server to accomplish the solution, is illustrated by the block diagram in Fig. 5. Various actions and messages are also schematically indicated in this figure. The notification server 500 is thus configured to provide data of a presentity to a watcher 504, e.g. in the manner described above for any of Figs 1-4. As in the previous examples, notification server 500 has been provisioned with set of predefined composition policies 500e and two or more data sources 502 are associated with the presentity.

According to this arrangement, the notification server 500 comprises a **receiving module 500a** adapted to receive published data P₁, P₂ from the data sources 502 of the presentity. Notification server 500 further comprises a **selecting module 500b** adapted to select a composition policy "X" from the predefined composition policies 500e based on information "Info" regarding the watcher 504. Dashed two-way arrows in the figure illustrate that selecting module 500b may obtain this watcher information from the watcher's access network 504a or from a presence server 504b holding information on the watcher. Alternatively, as described for the examples of Figs 3 and 4, the watcher information may be included in a request "Req" for data on the presentity received from the watcher, e.g. indicating a preferred composition policy.

**A composing module 500c** in server 500 is adapted to compose a notification N by applying the selected composition policy X to the received data P₁, P₂. The notification server 500 also comprises a communication unit 500d adapted to send the notification N to the watcher 504.

It should be noted that Fig. 5 merely illustrates various functional modules or units in the notification server 500 in a logical sense, although the skilled person is free to implement these functions in practice using suitable software and hardware means. Thus, the invention is generally not limited to the shown structures of the notification server 500, while its functional modules 500a - 500d may be configured to operate according to the features described for any of Figs 1 - 4 above, where appropriate.

The functional modules 500a - 500d described above can be implemented in the server 500 as program modules of a computer program comprising code means which, when run by a processor "P" in the server 500, causes the server 500 to perform the above-described functions and actions. The processor P may be a single CPU (Central processing unit), or could comprise two or more processing units. For example, the processor P may include general purpose microprocessors, instruction set processors and/or related chips sets and/or special purpose microprocessors such as ASICs (Application Specific Integrated Circuit). The processor P may also comprise a storage for caching purposes.

The computer program may be carried by a computer program product in the notification server 500 in the form of a memory "M" connected to the processor P. The computer program product or memory M comprises a computer readable medium on which the computer program is stored. For example, the memory M may be a flash memory, a RAM (Random-access memory), a ROM (Read-Only Memory) or an EEPROM (Electrically Erasable Programmable ROM), and the program modules could in alternative embodiments be distributed on different computer program products in the form of memories within the notification server 500.

The above notification server 500 and functional modules 500a - 500d may be configured or adapted to operate according to various optional embodiments. For example, the information regarding the watcher may refer to at least one of: a type of terminal used by the watcher, a current context of the watcher, characteristics of the watcher, a service agreement used by the watcher, and an access network currently used by the watcher. If the watcher's context is used as the watcher information, the selecting module 500b may be further adapted to determine the current context of the watcher from data published by or for the watcher, e.g. in the presence server 504b.

The information regarding the watcher may also refer to a preferred composition policy in the set of predefined composition policies 500e. In that case, the communication unit 500d may be further adapted to receive the request "Req" for data of the presentity from the watcher, where the request indicates the preferred composition policy, and the selecting module 500b may be further adapted to select the preferred composition policy in the request.

If the data received from data sources 502 is potentially overlapping or conflicting and include different timestamps, e.g. as described for Fig. 3 above, the selected composition policy X may dictate that only the data with a latest timestamp is included in the notification N. The composing module 500c may then be adapted to also include non-overlapping or non-conflicting data, if received from any of the sources 502, in the notification N regardless of timestamp.

The selecting module 500b could also be adapted to select the composition policy further based on a current context of the presentity, in addition to the watcher information, assuming that certain data is of no or little interest depending on the presentity's context, e.g. as exemplified above.

A practical example of composing a notification from overlapping and conflicting data according to a selected composition policy, will now be described with reference to Fig. 6. In this example, two sets of data of a presentity P₁, P₂ are sent from different data sources 1 and 2. The first data set P₁ of a timestamp 13.00 includes the following attributes:
"Activities: Meeting"
"Mood: Happy"
"Location: Stockholm"
"Timestamp: 13.00"

The second data set P₂ of a later timestamp 14.00 includes the following attributes:
"Activities: Lunch"
"Location: Gothenburg"
"Timestamp: 14.00"

It should be noted that the timestamp may thus technically be included as an attribute in the published data sets although it is rather "metadata" effectively. It can thus be seen that the attributes "Activities" and "Location" are deemed to be conflicting by having contradicting values at different timestamps. In this example, a composition policy is selected which dictates that attributes "Activities" and "Location" of the latest timestamp only should be included in the notification, while the attribute "Mood" of the earlier timestamp can be included as well. The resulting notification N is thus composed as:
"Activities: Lunch"
"Mood: Happy"
"Location: Gothenburg"
"Timestamp: 14.00".

It can be understood from the above description of various possible embodiments and features, that considerable advantages can be accomplished by using the solution. For example, it is possible to apply different composition policies for notifications depending on the watcher's current abilities, characteristics, conditions and/or situation. The notification can also be more or less optimized and composed with potentially relevant and useful information, as well as being devoid of any conflicting and/or overlapping data thus having a reasonable size which can be adapted to the prevailing situation or conditions.

While the invention has been described with reference to specific exemplary embodiments, the description is generally only intended to illustrate the inventive concept and should not be taken as limiting the scope of the invention. For example, the terms "watcher", "presentity", "notification server", "data source" and "composition policy" have been used throughout this description, although any other corresponding nodes, functions, and/or parameters could also be used having the features and characteristics described here. The invention is defined by the appended claims.

## Claims

1. A method performed by a notification server (100) of providing data of a presentity to a watcher (104), the method comprising:
- receiving (1:1, 200) published data from multiple sources (102) associated with the presentity,
- selecting (1:2, 202) a composition policy from a set of predefined composition policies (100a) based on information regarding the watcher, the composition policy being preferred by the watcher or being agreed with the watcher, wherein the information regarding the watcher refers to at least one of: a type of terminal used by the watcher, a current context of the watcher, characteristics of the watcher, a service agreement used by the watcher, and an access network currently used by the watcher,
- composing (1:3, 204) a notification by applying the selected composition policy to the received data, and
- sending (1:4, 206) the notification to the watcher.

2. A method according to claim 1, wherein the current context of the watcher is determined from data published by the watcher.

3. A method according to claim 1, wherein the information regarding the watcher further refers to a preferred composition policy in said set of predefined composition policies.

4. A method according to claim 3, wherein a request (Req) for data of the presentity is received from the watcher, said request indicating the preferred composition policy, and the preferred composition policy in the request is selected.

5. A method according to any of claims 1 to 4, wherein if the data received from said sources is potentially overlapping or conflicting and include different timestamps, the selected composition policy dictates that only the data with a latest timestamp is included in the notification.

6. A method according to claim 5, wherein non-overlapping or non-conflicting data received from any of said sources is also included in the notification regardless of timestamp.

7. A method according to any of claims 1 to 6, wherein the composition policy is selected further based on a current context of the presentity.

8. A notification server apparatus (500) configured to provide data of a presentity to a watcher (504), the notification server comprising:
- a receiving module (500a) adapted to receive published data from multiple sources (502) associated with the presentity,
- a selecting module (500b) adapted to select a composition policy from a set of predefined composition policies (500e) based on information (Info) regarding the watcher, the composition policy being preferred by the watcher or being agreed with the watcher, wherein the information (Info) regarding the watcher refers to at least one of: a type of terminal used by the watcher, a current context of the watcher, characteristics of the watcher, a service agreement used by the watcher, and an access network currently used by the watcher,
- a composing module (500c) adapted to compose a notification (N) by applying the selected composition policy to the received data, and
- a communication unit (500d) adapted to send the notification (N) to the watcher.

9. A notification server (500) according to claim 8, wherein the selecting module (500b) is further adapted to determine the current context of the watcher from data published by the watcher.

10. A notification server (500) according to claim 8, wherein the information regarding the watcher further refers to a preferred composition policy in said set of predefined composition policies.

11. A notification server (500) according to claim 10, wherein the communication unit (500d) is further adapted to receive a request (Req) for data of the presentity from the watcher, said request indicating the preferred composition policy, and the selecting module (500b) is further adapted to select the preferred composition policy in the request.

12. A notification server (500) according to any of claims 8 to 11, wherein if the data received from said sources is potentially overlapping or conflicting and include different timestamps, the selected composition policy dictates that only the data with a latest timestamp is included in the notification.

13. A notification server (500) according to claim 12, wherein the composing module (500c) is adapted to also include non-overlapping or non-conflicting data, received from any of said sources, in the notification regardless of timestamp.

14. A notification server (500) according to any of claims 8 to 13, wherein the selecting module (500b) is adapted to select the composition policy further based on a current context of the presentity.

## Patentansprüche

1. Von einem Benachrichtigungsserver (100) ausgeführtes Verfahren, um einem Abonnenten (104) Daten einer Presentity bereitzustellen, wobei das Verfahren Folgendes umfasst:
- Empfangen (1:1, 200) von veröffentlichten Daten von mehreren mit der Presentity verbundenen Quellen (102),
- Auswählen (1:2, 202) einer Gestaltungsrichtlinie aus einem Satz vorgegebener Gestaltungsrichtlinien (100a), basierend auf den Abonnenten betreffenden Informationen, wobei die Gestaltungsrichtlinie von dem Abonnenten bevorzugt wird oder mit dem Abonnenten vereinbart wurde, wobei die den Abonnenten betreffenden Informationen mindestens eines der Folgenden betreffen: eine Art des von dem Abonnenten verwendeten Endgeräts, einen aktuellen Kontext des Abonnenten, Eigenschaften des Abonnenten, einen von dem Abonnenten verwendeten Dienstleistungsvertrag und ein aktuell von dem Abonnenten verwendetes Zugangsnetz,
- Verfassen (1:3, 204) einer Benachrichtigung durch Anwenden der ausgewählten Gestaltungsrichtlinie auf die empfangenen Daten, und
- Senden (1:4, 206) der Benachrichtigung an den Abonnenten.

2. Verfahren nach Anspruch 1, wobei der aktuelle Kontext des Abonnenten aus von dem Abonnenten veröffentlichten Daten bestimmt wird.

3. Verfahren nach Anspruch 1, wobei die den Abonnenten betreffenden Informationen weiter eine bevorzugte Gestaltungsrichtlinie in dem Satz von vorgegebenen Gestaltungsrichtlinien betreffen.

4. Verfahren nach Anspruch 3, wobei eine Anforderung (Req) für Daten der Presentity vom Abonnenten empfangen wird, wobei die Anforderung die bevorzugte Gestaltungsrichtlinie angibt und die bevorzugte Gestaltungsrichtlinie in der Anforderung ausgewählt wird.

5. Verfahren nach einem der Ansprüche 1 bis 4, wobei, wenn die von den Quellen empfangenen Daten potenziell überlappend oder widersprüchlich sind und unterschiedliche Zeitstempel umfassen, die ausgewählte Gestaltungsrichtlinie vorschreibt, dass nur die Daten mit einem neuesten Zeitstempel in die Benachrichtigung aufgenommen werden.

6. Verfahren nach Anspruch 5, wobei nicht überlappende oder nicht widersprüchliche Daten, die von beliebigen der Quellen empfangen wurden, ungeachtet des Zeitstempels ebenfalls in die Benachrichtigung aufgenommen werden.

7. Verfahren nach einem der Ansprüche 1 bis 6, wobei die Gestaltungsrichtlinie weiter basierend auf einem aktuellen Kontext der Presentity ausgewählt wird.

8. Benachrichtigungsserver-Vorrichtung (500), die dazu ausgebildet ist, einem Abonnenten (504) Daten einer Presentity bereitzustellen, wobei der Benachrichtigungsserver Folgendes umfasst:
- ein Empfangsmodul (500a), das dazu angepasst ist, veröffentlichte Daten von mehreren mit der Presentity assoziierten Quellen (502) zu empfangen,
- ein Auswahlmodul (500b), das dazu angepasst ist, eine Gestaltungsrichtlinie aus einem Satz vorgegebener Gestaltungsrichtlinien (500e) basierend auf den Abonnenten betreffenden Informationen (Info) auszuwählen, wobei die Gestaltungsrichtlinie von dem Abonnenten bevorzugt wird oder mit dem Abonnenten vereinbart wurde, wobei die den Abonnenten betreffenden Informationen (Info) mindestens eines der Folgenden betreffen: eine Art des von dem Abonnenten verwendeten Endgeräts, einen aktuellen Kontext des Abonnenten, Eigenschaften des Abonnenten, einen von dem Abonnenten verwendeten Dienstleistungsvertrag und ein aktuell von dem Abonnenten verwendetes Zugangsnetz,
- ein Gestaltungsmodul (500c), das dazu angepasst ist, eine Benachrichtigung (N) durch Anwenden der ausgewählten Gestaltungsrichtlinie auf die empfangenen Daten zusammenzustellen; und
- eine Kommunikationseinheit (500d), die dazu angepasst ist, die Benachrichtigung (N) an den Abonnenten zu senden.

9. Benachrichtigungsserver (500) nach Anspruch 8, wobei das Auswahlmodul (500b) weiter dazu angepasst ist, den aktuellen Kontext des Abonnenten aus von dem Abonnenten veröffentlichten Daten zu bestimmen.

10. Benachrichtigungsserver (500) nach Anspruch 8, wobei die den Abonnenten betreffenden Informationen weiter eine bevorzugte Gestaltungsrichtlinie in dem Satz von vorgegebenen Gestaltungsrichtlinien betreffen.

11. Benachrichtigungsserver (500) nach Anspruch 10, wobei die Kommunikationseinheit (500d) weiter dazu angepasst ist, eine Anforderung (Req) für Daten der Presentity von dem Abonnenten zu empfangen, wobei die Anforderung die bevorzugte Gestaltungsrichtlinie angibt, und das Auswahlmodul (500b) weiter dazu angepasst ist, die bevorzugte Gestaltungsrichtlinie in der Anforderung auszuwählen.

12. Benachrichtigungsserver (500) nach einem der Ansprüche 8 bis 11, wobei, wenn die von den Quellen empfangenen Daten potenziell überlappend oder widersprüchlich sind und unterschiedliche Zeitstempel umfassen, die ausgewählte Gestaltungsrichtlinie vorschreibt, dass nur die Daten mit einem neuesten Zeitstempel in die Benachrichtigung aufgenommen werden.

13. Benachrichtigungsserver (500) nach Anspruch 12, wobei das Gestaltungsmodul (500c) dazu angepasst ist, von beliebigen der Quellen empfangene, nicht überlappende oder nicht widersprüchliche Daten ungeachtet des Zeitstempels ebenfalls in die Benachrichtigung aufzunehmen.

14. Benachrichtigungsserver (500) nach einem der Ansprüche 8 bis 13, wobei das Auswahlmodul (500b) dazu angepasst ist, die Gestaltungsrichtlinie weiter basierend auf einem aktuellen Kontext der Presentity auszuwählen.

## Revendications

1. Procédé effectué par un serveur de notifications (100) pour fournir des données d'une présentité à un observateur (104), le procédé comprenant les étapes consistant à :
- recevoir (1:1, 200) des données publiées de sources multiples (102) associées à la présentité,
- choisir (1:2, 202) une police de composition dans un ensemble de polices de composition prédéfinies (100a) sur la base d'informations concernant l'observateur, la police de composition étant préférée par l'observateur ou étant agréée avec l'observateur, dans lequel les informations concernant l'observateur se réfèrent à au moins l'une des suivantes : le type de terminal utilisé par l'observateur, le contexte courant de l'observateur, les caractéristiques de l'observateur, un accord de service utilisé par l'observateur et un réseau d'accès couramment utilisé par l'observateur,
- composer (1:3, 204) une notification en appliquant la police de composition choisie aux données reçues, et
- envoyer (1:4, 206) la notification à l'observateur.

2. Procédé selon la revendication 1, dans lequel le contexte courant de l'observateur est déterminé à partir de données publiées par l'observateur.

3. Procédé selon la revendication 1, dans lequel les informations concernant l'observateur se réfèrent en outre à une police de composition préférée dudit ensemble de polices de composition prédéfinies.

4. Procédé selon la revendication 3, dans lequel une demande (Req) pour des données de la présentité est reçue de l'observateur, ladite demande indiquant la police de composition préférée, et la police de composition préférée de la demande est choisie.

5. Procédé selon l'une quelconque des revendications 1 à 4, dans lequel, si les données reçues desdites sources se chevauchent potentiellement ou sont en conflit et comprennent des références temporelles différentes, la police de composition choisie dicte que seules les données ayant la toute dernière référence temporelle sont comprises dans la notification.

6. Procédé selon la revendication 5, dans lequel les données non chevauchantes ou non conflictuelles reçues de l'une quelconque desdites sources sont également incluses dans la notification quelle que soit la référence temporelle.

7. Procédé selon l'une quelconque des revendications 1 à 6, dans lequel la police de composition est choisie en outre sur la base d'un contexte courant de la présentité.

8. Appareil serveur de notifications (500) configuré pour fournir des données d'une présentité à un observateur (504), le serveur de notifications comprenant :
- un module de réception (500a) qui est à même de recevoir des données publiées de multiples sources (502) associées à la présentité,
- un module de sélection (500b) qui est à même de choisir une police de composition dans un ensemble de polices de composition prédéfinies (500e) sur la base d'informations (Info) concernant l'observateur, la police de composition étant préférée par l'observateur ou étant agréée avec l'observateur, dans lequel les informations (Info) concernant l'observateur se réfèrent à au moins l'une des suivantes : le type de terminal utilisé par l'observateur, le contexte courant de l'observateur, les caractéristiques de l'observateur, l'accord de service utilisé par l'observateur et le réseau d'accès couramment utilisé par l'observateur,
- un module de composition (500c) qui est à même de composer une notification (N) en appliquant la police de composition choisie aux données reçues, et
- une unité de communication (500d) qui est à même d'envoyer la notification (N) à l'observateur.

9. Serveur de notifications (500) selon la revendication 8, dans lequel le module de sélection (500b) est encore à même de déterminer le contexte courant de l'observateur à partir de données publiées par l'observateur.

10. Serveur de notifications (500) selon la revendication 8, dans lequel les informations concernant l'observateur se réfèrent en outre à une police de composition préférée dudit ensemble de polices de composition prédéfinies.

11. Serveur de notifications (500) selon la revendication 10, dans lequel l'unité de communication (500d) est encore à même de recevoir une demande (Req) pour des données de la présentité depuis l'observateur, ladite demande indiquant la police de composition préférée, et le module de sélection (500b) est en outre à même de choisir la police de composition préférée dans la demande.

12. Serveur de notifications (500) selon l'une quelconque des revendications 8 à 11, dans lequel, si les données reçues desdites sources sont potentiellement chevauchantes ou conflictuelles et comprennent différentes références temporelles, la police de composition choisie dicte que seules les données ayant la toute dernière référence temporelle sont incluses dans la notification.

13. Serveur de notifications (500) selon la revendication 12, dans lequel le module de composition (500c) est à même d'inclure également des données non chevauchantes ou non conflictuelles, reçues de l'une quelconque desdites sources, dans la notification quelle que soit la référence temporelle.

14. Serveur de notifications (500) selon l'une quelconque des revendications 8 à 13, dans lequel le module de sélection (500b) est à même de choisir la police de composition qui est en outre basée sur un contexte courant de la présentité.
